# EUROPÄISCHE PATENTSCHRIFT

(11) **EP 2 860 051 B1**
(45) Veröffentlichungstag und Bekanntmachung des Hinweises auf die Patenterteilung: **17.07.2019**
(21) Anmeldenummer: 14187991.6
(22) Anmeldetag: 07.10.2014
(51) Int. Cl.: B60G 9/00, B60G 7/02, A01D 90/00, A01D 67/00, B62D 21/20

(54) **Achsaggregat für einen landwirtschaftlichen Anhänger und landwirtschaftlicher Anhänger**
Axle device for an agricultural trailer and agricultural trailer
Dispositif d'essieu pour une remorque agricole et remorque agricole

(30) Priorität: 10.10.2013 DE 102013111216
(43) Veröffentlichungstag der Anmeldung: 15.04.2015
(73) Patentinhaber: CLAAS Saulgau GmbH, 88348 Bad Saulgau (DE)
(72) Erfinder: Sauter, Stefan, 88529 Zwiefalten (DE)

(56) Entgegenhaltungen:
- EP-A1- 0 812 756
- EP-A1- 1 245 476
- WO-A1-81/01984
- WO-A1-2012/060745
- AT-B- 216 899
- CA-A1- 2 509 171
- CH-A5- 593 811
- DE-A1- 10 011 559
- DE-U1- 7 618 179
- DE-U1- 9 103 811
- DE-U1- 29 705 672

## Beschreibung

Die Erfindung betrifft ein Achsaggregat für einen landwirtschaftlichen Anhänger und einen landwirtschaftlichen Anhänger gemäß den Merkmalen des Patentanspruchs 1 bzw. 7.

Landwirtschaftliche Anhänger sind allgemein bekannt und werden beispielsweise zum Transport von landwirtschaftlichem Erntegut oder zum Transport sowie zum Ausbringen von Düngemitteln auf landwirtschaftlichen Flächen verwendet.

Es sind auch Ladewagen bzw. Selbstladewagen bekannt, welche das Erntegut im landwirtschaftlichen Feldeinsatz durch eine sogenannte Pick-up direkt vom Boden aufnehmen. Solche Ladewagen können zudem mit einem Schneidaggregat zur Zerkleinerung des Ernteguts ausgestattet sein, welches der Pick-up im Gutfluss nachgeordnet ist. Mit den beschriebenen landwirtschaftlichen Anhängern wird bei ihrem Einsatz sowohl auf landwirtschaftlichen Flächen - wie Feldern - als auch auf öffentlichen Straßen gefahren.

Aus DE 91 03 811 U1 ist ein Fahrgestell für Fahrzeuganhänger mit einer V-förmigen starren Zugdeichsel, einer Anhängerkupplung für Kugelköpfe und mindestens einer Achse bekannt, wobei innerhalb einer Anhänger-Baureihe für verschiedene Traglasten und/oder Aufbauten die Zugdeichseln einheitlich sind, und wobei die Längsholme zumindest eine gleiche Formgebung und Länge haben und mehrere vorbereitete und in einer Reihe angeordnete Befestigungspunkte für verschiedene Aufbauten oder eine variable Aufbaubefestigung aufweisen sowie die Achse an den Längsholmen verstellbar befestigt ist, wobei die Längsholme eine weitere Reihe von vorbereiteten Befestigungspunkten für die Achse aufweisen.

Aus DE 91 03 811 U1 und DE 297 05 672 U1 sind C-förmige Längsträger eines Anhängers bekannt.

AT-B-216 899 offenbart einen geländegängigen Anhänger, insbesondere für die Landwirtschaft, mit die Radpaare verbindenden, ruhenden Achsen, an denen die Räder mittels Radschenkel lenkbar gelagert sind, einem die beiden Achsen verbindenden, aus mindestens einem Lagerrohr und einem darin schwenkbar gelagerten weiteren Rohr bestehenden, die gegenseitige Verschwenkung der Radachsen gestattenden mittleren Längsträger und zwei über den Radachsen angebrachten Querträgern zur Aufnahme des Ladegutes, wobei der mittlere Längsträger mit den äußeren Enden der Achsen beiderseits durch je zwei an sich bekannte V-förmig zum Achsende zusammenlaufende, schräg nach unten gehende Streben und die Querträger außer der Verbindung mit dem Längsträger noch durch lotrechte Stützen mit den Achsenden fest verbunden sind.

Mit zunehmender Ladekapazität von landwirtschaftlichen Anhängern wird auch deren Achslast gesteigert. Zur Schonung der befahrenen landwirtschaftlichen Flächen sowie zur Einhaltung von gesetzlich zulässigen Achslasten, werden die Fahrwerke von landwirtschaftlichen Anhängern je nach zulässigem Gesamtgewicht oder dem Einsatzzweck mit einer, zwei, drei oder mehr Achsen ausgestattet.

Die Räder einer Achse können hydropneumatisch, hydraulisch, pneumatisch oder durch Blattfedern gefedert sein. Weiterhin können insbesondere bei Tandem- sowie Tridem-Achsen Nachlauf- oder Zwangslenkungen vorgesehen werden. Darüber hinaus können die Achsen an verschiedenen Längspositionen angeordnet werden, wodurch je nach Wunsch unterschiedliche Wendekreise oder Lastverteilungen verwirklicht werden.

Je nach Ausstattungswunsch werden für die verschiedenen Federungsarten sowie Lenkungseinrichtungen nach dem Stand der Technik unterschiedliche Halterungen an unterschiedlichen Stellen eines Rahmens eines Achsaggregates angeschweißt. Eine Schweißverbindung stellt eine unlösbare Verbindung von Teilen dar, die nur durch Zerstörung der Schweißnähte wieder voneinander gelöst werden können. Ein entsprechend vorgefertigtes Achsaggregat ist daher auf einen speziellen Federungstyp und ggf. eine spezielle Lenkungseinrichtung festgelegt und lässt sich diesbezüglich nicht mehr abändern.

Damit Anhänger mit verschiedenen Federungseigenschaften schnell verfügbar sind, muss ein Hersteller für jeden Anhänger mehrere - jeweils für unterschiedliche Achsen vorbereitete - Achsaggregate bereit halten, um die jeweiligen Kundenwünsche und/oder die jeweiligen gesetzlichen Anforderungen des Bestimmungslandes einhalten zu können. Dies erfordert aufgrund der großen Bauteile einen großen Lagerungsaufwand und ist sehr kostenintensiv.

Hiervon ausgehend ist es die Aufgabe der Erfindung, ein neuartiges Achsaggregat für einen landwirtschaftlichen Anhänger sowie einen neuartigen landwirtschaftlichen Anhänger zu schaffen.

Diese Aufgabe wird erfindungsgemäß durch die Merkmale der Patentansprüche 1 und 7 gelöst.

An einem erfindungsgemäßen Achsaggregat können auf vorteilhaft einfache Weise sowie innerhalb kurzer Zeit Achsmodule mit unterschiedlichen Federungs- bzw. Lenkungskonzepten mit verschiedenen Achsabständen montiert werden. Erfindungsgemäße Achsaggregate können vorteilhaft einfach umgebaut werden und an einen geänderten Kundenwunsch angepasst werden.

Die Festlegung auf eine finale Spezifikation eines erfindungsgemäßen Achsaggregats kann vorteilhafter Weise erst kurz vor der Auslieferung erfolgen. Einfache Änderungen sind auch noch nach Auslieferung beim Kunden möglich.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: ein erfindungsgemäßes Achsaggregat mit mechanisch gefederten Achsmodulen,
- Fig. 2: ein erfindungsgemäßes Achsmodul mit hydropneumatischer Federung,
- Fig. 2a: eine Seitenansicht eines Teils eines erfindungsgemäßen Achsaggregats,
- Fig. 3: einen Schnitt durch einen Querträger,
- Fig. 4: einen Längsträger eines erfindungsgemäßen Achsaggregats und
- Fig. 5: einen landwirtschaftlichen Anhänger mit einem erfindungsgemäßen Achsaggregat.

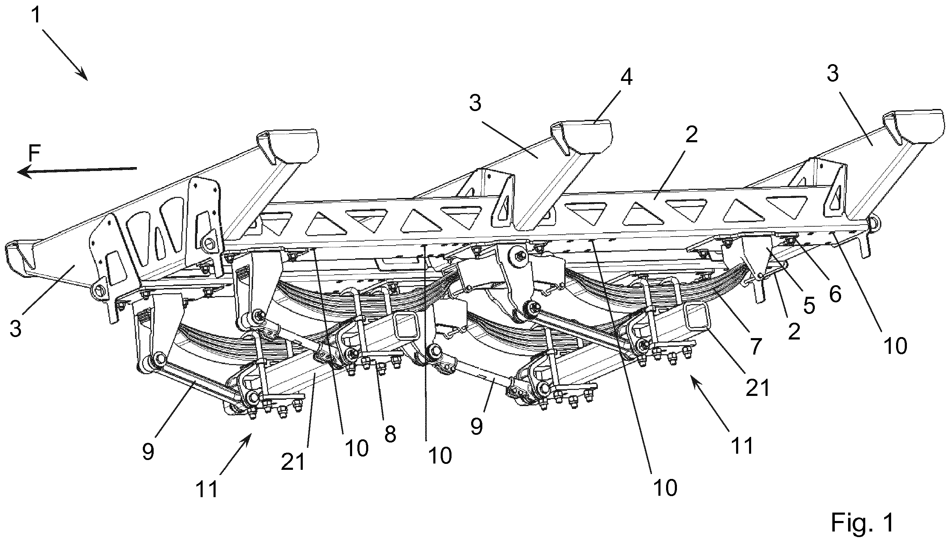

In Fig. 1 ist ein erfindungsgemäßes mechanisch gefedertes Achsaggregat 1 für einen landwirtschaftlichen Anhänger in räumlicher Darstellung abgebildet, bei welchem zur besseren Übersicht keine Räder sowie keine Radträger bzw. Naben montiert sind. Das beispielhafte Achsaggregat 1 besteht aus zwei parallel angeordneten Längsträgern 2, welche im gezeigten Ausführungsbeispiel durch drei Querträger 3 miteinander verbunden sind und damit einen Rahmen des Achsaggregates 1 bilden. Die Längsträger 2 und die Querträger 3 können miteinander verschraubt und/oder verschweißt sein. Die Längsträger 2 sind vorzugsweise etwa parallel zur Fahrtrichtung F ausgerichtet und die Querträger 3 sind vorzugsweise rechtwinklig zu den Längsträgern 2 angeordnet so dass sie etwa orthogonal zur Fahrtrichtung F ausgerichtet sind. Die Querträger 3 weisen Aufnahmen 4 auf, an welchen eine Nutzfläche oder ein Laderaum des landwirtschaftlichen Anhängers angeordnet bzw. befestigt werden kann.

Je nach dem für welche Belastungen das Achsaggregat 1 ausgelegt bzw. für welche Anwendung es vorgesehen wird, kann der Rahmen auch mit weniger als drei Querträgern 3 bzw. auch ohne Querträger ausgeführt werden und statt zwei Längsträger könnte auch nur ein einziger vorgesehen werden, an dessen Unterseite mindestens ein Achsmodul angeordnet ist, das sich mit Rädern gegenüber dem Boden abstützt. Bei einem erfindungsgemäßen Rahmen werden die Längs- und Querträger vorzugsweise modular also nach einem Baukastenprinzip angefertigt, so dass je nach Anforderung eine unterschiedliche Anzahl von Querträgern mit Längsträgern kombiniert werden können, deren Länge individuell anpassbar ist.

An dem beispielhaften mechanisch gefederten Achsaggregat 1 aus Fig. 1 sind zwei Achsmodule 11 vorgesehen, welche jeweils mit Halterungen 5 beidseitig an den Längsträgern 2 befestigt sind. Erfindungsgemäß sind die Halterungen 5 jeweils durch Schraubverbindungen am Längsträger 2 befestigt, wodurch sie sich einfach - insbesondere zerstörungsfrei - wieder vom Längsträger 2 lösen lassen.

Dazu sind an den Halterungen 5 Bohrungen 6 vorgesehen, die sich mit Bohrungen 10, welche am Längsträger 2 bzw. Rahmen vorgesehen sind, in Deckung bringen lassen. Nachdem dies an einer gewünschten Position am Längsträger 2 geschehen ist, können Schrauben durch die Bohrungen 5, 10 hindurch gesteckt werden und die Halterung 5 kann durch Anziehen einer Mutter, d.h. Herstellung der Schraubverbindung, in allgemein bekannter Weise kraftschlüssig am Längsträger 2 fixiert werden. Alternativ könnte die Kraftübertragung auch formschlüssig - beispielsweise mittels Stiftverbindungen - realisiert werden.

In der Längsrichtung des Längsträgers 2 sind vorzugsweise mehr Bohrungen 10 vorgesehen als für die Verschraubung der Halterungen 5 erforderlich sind. Die Bohrungen 10 sind so angeordnet, dass jede Halterung 5 an mindestens zwei verschiedenen gegeneinander versetzten Aufnahmepositionen am Längsträger montiert werden kann. Vorzugsweise werden an einem Längsträger 2 eine Vielzahl von Bohrungen 10 mit einem vorbestimmten Abstand zueinander angeordnet, die ein vorgegebenes Raster bilden. Die Halterungen 5 können anhand dieses Rasters an mehreren jeweils um das Rastermaß versetzten Aufnahmepositionen am Längsträger 2 montiert werden.

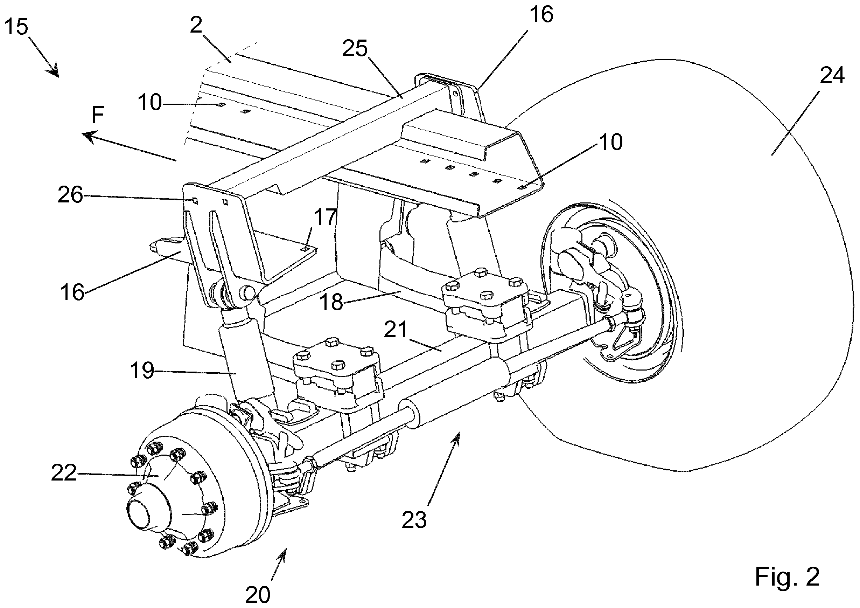

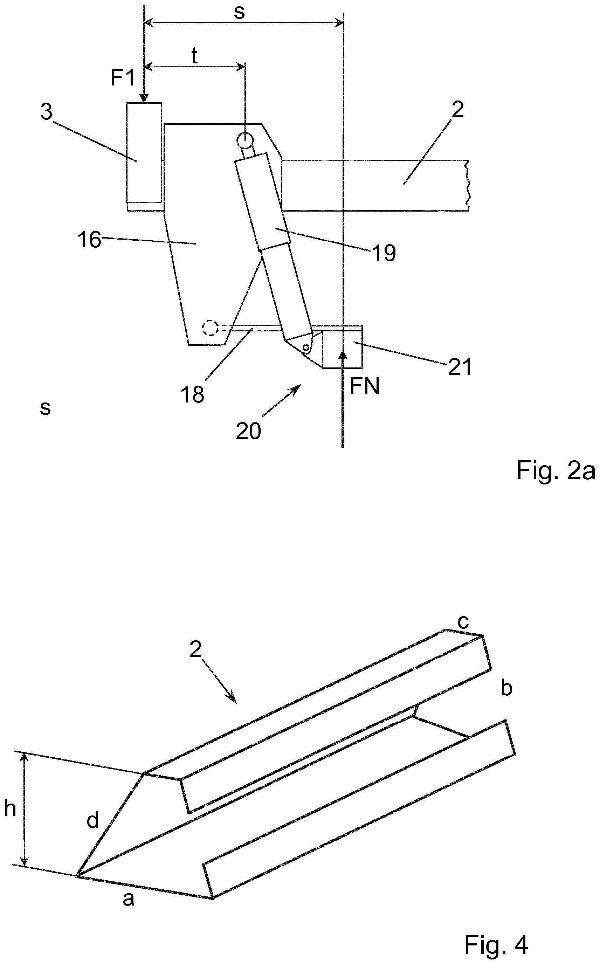

Zum Verschrauben der Halterungen werden vorzugsweise Schrauben verwendet, die im Bereich des Schraubenschafts formschlüssig in einer Bohrung 6, 10 aufnehmbar und dadurch gegen Verdrehung gesichert sind. Die Bohrungen 6, 10 einer Halterung 5 bzw. am Längsträger 2 weisen dazu vorzugsweise einen quadratischen Querschnitt auf und die sogenannten Flachrundschrauben haben im Bereich des Kopfes einen passenden Vierkant. Die Bohrungen 6, 10 (17, Fig. 2) können auch als Langlöcher, z.B. mit rechteckigem Querschnitt, ausgeführt werden, um die Halterungen 5 (16, Fig. 2) vor dem Anziehen der Schrauben gegenüber dem Längsträger 2 justieren zu können.

Bei dem Ausführungsbeispiel gemäß Fig. 1 sind an den Halterungen 5 Aufhängungen für Blattfedern 7 angeordnet, wobei an den mittleren Halterungen 5 jeweils die Enden der Blattfedern 7 der hinteren und vorderen Achse aufgehängt sind bzw. abgestützt und geführt werden.

An den Blattfedern 7 sind Aufnahmen 8 vorgesehen, an welchen eine Achse aufgenommen werden kann. Die nicht dargestellte Achse besteht im Wesentlichen vorzugsweise aus einem Rohr an dessen Enden Naben zur Montage von Rädern vorgesehen sind. In den Aufnahmen 8 ist ein bevorzugt verwendetes Vierkantrohr gehaltert, welches als Achskörper 21 an den Enden die Räder des Anhängers abstützt.

Für jede Achse ist auf beiden Seiten eine Zugstrebe 9 vorgesehen, welche vorzugsweise an die Aufnahme 8 angebunden ist und jeweils an einer der Halterungen 5 gelagert ist. Die Zugstreben 9 nehmen die auf die Achse wirkenden Längskräfte auf, die insbesondere beim Bremsen übertragen werden müssen.

Ein anderes beispielhaftes Achsmodul 15 ist in Fig. 2 dargestellt. Das hydropneumatisch gefederte Achsmodul 15 weist abgewinkelte Halterungen 16 auf, die an den horizontal ausgerichteten Flächen Bohrungen 17 zur Verschraubung an der Unterseite eines Längsträgers 2 (Fig. 1) aufweisen. Die Bohrungen 17 sind an die Abstände der Bohrungen 10 des Längsträgers 2 (Fig. 1) angepasst und ermöglichen es, dass das Achsmodul 15 alternativ zu den in Fig. 1 dargestellten Achsmodulen am Rahmen bzw. Längsträger 2 an unterschiedlichen Positionen montiert werden kann.

An den vertikal ausgerichteten Flächen der Halterungen 16 sind außen Hydraulikzylinder 19 angelenkt, welche schräg nach unten verlaufen und an ihrem anderen Ende mit einem Achskörper 21 einer Achse 20 verbunden sind. Der Achskörper kann beispielsweise als Vierkantrohr oder zylindrisches Rohr ausgeführt werden. Ebenso könnte der Achskörper auch aus vollem Material, d.h. massiv ausgeführt werden. Die Hydraulikzylinder 19 sind Teil einer hydropneumatischen Radaufhängung, wie sie allgemein bekannt ist und deshalb hier nicht näher beschrieben wird. Die etwa vertikal nach oben verlaufenden Seitenflächen der Halterung 16 können so lang ausgeführt werden, dass sie über den Längsträger 2 (Fig. 1) hinausragen und über eine Strebe miteinander verbunden werden können. Eine solche Domstrebe 25 kann an Bohrungen 26 mit der Halterung 16 verschraubt werden und dient zur Versteifung des Rahmens, wodurch dessen Torsionsfestigkeit erhöht wird.

Die Achse 20 trägt an beiden Enden des Achskörpers 21 Naben 22, auf welchen Räder 24 aufgenommen werden, mit welchen sich das Achsmodul 15 am Boden abstützt. Die Naben 22 können unterschiedliche - dem Fachmann hinreichend bekannte - Bremseinrichtungen aufweisen. Weiterhin können die Naben 22 schwenkbar am Achskörper 21 angeordnet sein, d.h. um etwa vertikal ausgerichtete Drehachsen drehbar, so dass die Räder 24 über Lenkeinrichtungen 23 gelenkt werden können. Es können alle dem Fachmann bekannten Lenkungsarten vorgesehen werden, wie beispielsweise Nachlauflenkung oder Zwangslenkung. Zur Aufnahme von Zugkräften - wie sie beispielsweise beim Bremsen auftreten - ist der Achskörper 21 zusätzlich zu den Hydraulikzylindern über Zugstreben 18 an die Halterungen 16 angebunden, die etwa parallel zur Fahrtrichtung F ausgerichtet sind. Die Zugstreben 18 nehmen die Längskräfte des Achsaggregats auf und sind vorzugsweise an den Unterseiten der Halterungen 16 gelagert. Im dargestellten Ausführungsbeispiel sind die Zugstreben 18 als Parabelfedern ausgeführt, welche zusätzlich die vom Achsaggregat aufzunehmende Gewichtskraft federnd auf der Achse 20 abstützen.

Durch die schräge Anordnung eines Hydraulikzylinders 19 wird die Gewichtskraft des landwirtschaftlichen Anhängers auf einem kürzeren Weg - also direkter - in die Achse 20 eingeleitet, wodurch der Längsträger entsprechend weniger belastet wird und daher schwächer, d.h. vorteilhaft leichter, ausgelegt werden kann.

In Fig. 2a ist der entsprechende Bereich eines erfindungsgemäßen Achsaggregats ausschnittsweise in einer Seitenansicht dargestellt. Darin wird ein Teil der Gewichtskraft des Anhängers durch die Kraft F1 über einen Querträger 3 auf einen Längsträger 2 übertragen. Am Längsträger 2 ist über die Halterung 16 die Achse 20 angelenkt, wobei die Zugstrebe 18 für Längskräfte und der Hydraulikzylinder 19 zum Abstützen der Kraft F1 vorgesehen sind. Der Hydraulikzylinder 19 stützt sich hierzu auf dem Achskörper 21 ab, an welchem ein nicht dargestelltes Rad angeordnet ist, welches sich am Boden mit der Kraft FN abstützt. Um eine direktere Kraftleitung zu erreichen, wird der Hydraulikzylinder 19 nicht senkrecht über der Wirkungslinie der Kraft FN an den Längsträger 2 angebunden, sondern versetzt und damit näher am Querträger 3. Dadurch greift die Stützkraft mit einem kleineren Hebelarm t am Längsträger 2 an, wodurch dieser einer geringeren Biegebelastung ausgesetzt ist, da die Kräfte lokal in das Achsmodul 15 eingeleitet und abgebaut werden. Bei einer senkrechten Krafteinleitung würde die Stützkraft mit einem längeren Hebelarm s eine entsprechend größere Biegekraft auf den Längsträger 2 ausüben, da die Krafteinleitungsstellen des Hydraulikzylinders 19 und der Parabelfeder 18 entkoppelt wären.

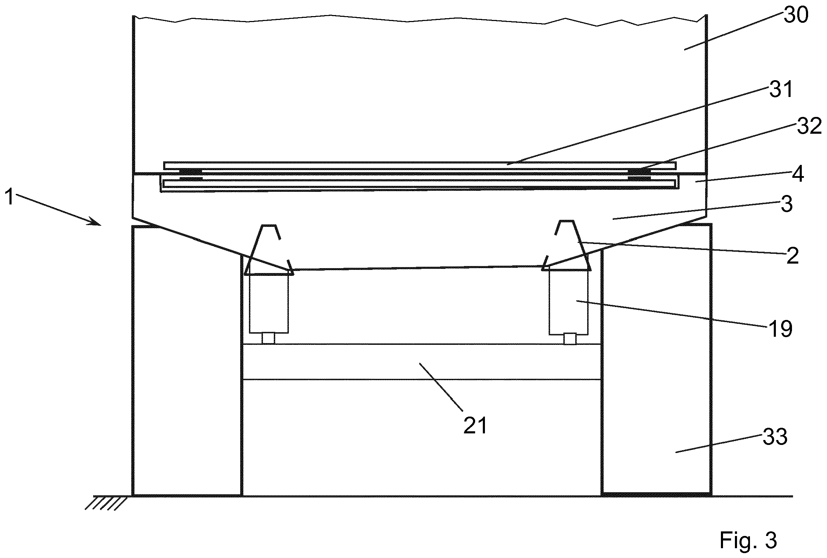

In Fig. 3 ist ein Querschnitt durch ein erfindungsgemäßes Achsaggregat mit Sicht auf einen Querträger 3 dargestellt. Weiterhin sind die Räder 33 einer Achse ersichtlich, die - wie oben ausgeführt - an Naben angeordnet sind, welche über einen Achskörper 21 miteinander verbunden sind. Die Achse wird über den Achskörper 21 durch Hydraulikzylinder 19 am Rahmen bzw. an den Längsträgern 2 abgestützt. Auf dem Querträger 3 ist eine Nutzfläche des landwirtschaftlichen Anhängers in Form eines beispielhaften Laderaums 30 eines Ladewagens angeordnet, der an den Aufnahmen 4 fixiert ist.

Die vorzugsweise an den Außenkanten der Querträger 3 angeordneten Aufnahmen 4 sind vorzugsweise gegenüber der Oberkante des Querträgers 3 erhöht angeordnet, so dass zwischen dem Boden des Laderaums 30 und der Oberkante des Querträgers 3 ein Freiraum entsteht, der einen Durchlass für einen Kratzboden 31 bietet, welcher beim Be- oder Entladen des Ladewagens über Zugmittel 32 - wie Ketten oder ähnlichem - über den Boden des Laderaums 30 bewegt wird. Im Ausführungsbeispiel ist ein einteiliger Kratzboden 31 dargestellt. Selbstverständlich können auch mehrteilige Kratzböden vorgesehen werden.

Der oder die Längsträger 2 sind als offenes Hohlprofil mit einem trapezförmigen Querschnitt ausgeführt (siehe Fig. 4), welches vorzugsweise durch entsprechendes Abkanten eines flachen Zuschnitts eines Bleches hergestellt wird. Die Grundfläche a dieses Trapezes ist auf die Breite der Halterungen 5, 16 angepasst.

Durch die Höhe h kann die Biegefestigkeit des Rahmens beeinflusst werden und durch Vergrößerung für größere Belastungen ausgelegt werden. Durch die Auswahl eines Materials mit größerer Zugfestigkeit und/oder einer größeren Blechdicke des Ausgangsmaterials kann die Belastbarkeit des Rahmens ebenso gesteigert werden.

Da die Seitenfläche b offen ist, kann der Innenraum des Längsträgers vorteilhaft als Bauraum genutzt werden, in dem Leitungen verlegt werden oder Sonstige Bauteile montiert werden können. Bei Ausführungen mit zwei Längsträgern 2 werden diese so angeordnet, dass sich die offenen Seiten b gegenüberstehen bzw. einander zugewendet sind (siehe Fig. 3).

Die Oberseite c eines Längsträgers 2 ist wesentlich schmäler als die Grundfläche a ausgelegt, wodurch vorteilhaft Gewicht eingespart wird, ohne dass die erforderliche Belastbarkeit des Längsträgers 2 darunter leidet. Weiterhin kann die geschlossene Seite d mit Durchbrüchen bzw. Ausnehmungen versehen werden, wodurch weiteres Gewicht eingespart werden kann. Darüber hinaus kann durch die Durchbrüche bzw. Ausnehmungen in den Längsträger 2 eingegriffen werden, wodurch die Montage bzw. Demontage des Achsaggregates erleichtert wird.

Durch Anordnung und Fixierung der Halterungen 5, 16 an der Unterseite der Längsträger 2 beanspruchen diese in seitlicher Richtung links und rechts wenig Bauraum. Dadurch können unter Einhaltung einer gesetzlich maximal zulässigen Fahrzeugbreite, entsprechend breitere Reifen verwendet werden, die eine geringere Flächenpressung auf den Boden ausüben und diesen - insbesondere einen Feldboden - weniger verdichten. Darüber hinaus kann der Bauraum auch dazu genutzt werden, den Lenkeinschlag einer Lenkachse zu vergrößern.

Neben den oben genannten allgemein bekannten Brems- und Lenkungseinrichtungen kann ein erfindungsgemäßes Achsaggregat auch mit allgemein bekannten Hebeeinrichtungen für die Achsen ausgestattet werden, durch welche eine oder mehrere Achsen angehoben werden können, um diese sogenannten Liftachsen - wie allgemein bekannt - zu Deaktivieren.

Neben den oben beschriebenen Schraubverbindungen zur lösbaren Fixierung der Halterungen 5, 16 am Rahmen bzw. an dessen Längsträgern 2, sind auch andere lösbare Fixiermittel möglich. So können die Halterungen alternativ als Klemmplatten ausgeführt sein, die schellenartig über Bolzen an der Unter- und Oberseite des Längsträgers festgeklemmt werden.

Ein wesentlicher Kern der Erfindung ist darin zu sehen, dass die Bauteile, mit welchen die Räder des landwirtschaftlichen Anhängers am Rahmen des Achsaggregates angebunden sind, lösbar an diesem fixiert sind. Dadurch können diese auf einfache Weise montiert sowie insbesondere auch zerstörungsfrei demontiert werden.

Dazu werden vorzugsweise alle Bauteile, welche eine kraftübertragende Funktion haben und an den Rahmen angebunden werden müssen, an Halterungen montiert, die eine definierte Schnittstelle zum Rahmen aufweisen. Diese Schnittstellen können in Form von Bohrungen für Schraubenverbindungen oder als Klemmverbindungen ausgeführt werden. Die kraftübertragenden Bauteile bzw. deren Aufnahmen oder Lagerstellen können an den Halterungen sowohl lösbar (geschraubt) als auch unlösbar, d.h. z.B. durch Schweißverbindungen, fixiert werden.

Dadurch können Achsmodule mit unterschiedlichen Ausstattungen bezüglich Federung, Dämpfung sowie Lenkung usw. vorgefertigt werden und ein Achsaggregat kann je nach Bedarf mit den entsprechenden Achsmodulen komplettiert werden.

Durch die Trennung der nach dem Stand der Technik durch Schweißverbindungen unlösbar miteinander verbunden Bauteile und Bildung einzelner Module, die an vorgegebenen Schnittstellen zusammengefügt werden können, kann ein erfindungsgemäßes Achsaggregat modular nach dem sogenannten Baukastenprinzip zusammengestellt werden.

Der Rahmen eines erfindungsgemäßen Achsaggregates, der eine Nutzfläche oder einen Laderaum aufnimmt, besteht aus mindestens einem Längsträger, welcher bzw. welche mit den Schnittstellen zur lösbaren Befestigung der Achsmodule versehen sind.

Durch das Vorsehen von verschiedenen Aufnahmepositionen an dem oder den Längsträgern, insbesondere durch gerastert angeordnete Befestigungsbohrungen, können auch die Abstände zwischen den einzelnen Achsen sowie deren Anzahl variiert werden. Durch eine asymmetrische Anordnung der Querträger - insbesondere eine außermittige Anordnung des mittleren Querträgers in Fig. 1 - kann bei unterschiedlichen Achsabständen die Krafteinleitung in die Querträger mit geringem Abstand dargestellt werden, da die Achsmodule unabhängig vom Achsabstand relativ nah bei den Querträgern angeordnet werden können. Dadurch wird eine vorteilhafte direkte Krafteinleitung von einem Achsmodul über die Längs- und Querträger in den Aufbau bzw. zur Nutzfläche realisiert.

Ein derart asymmetrisch aus Längs- und Querträgern bestehender Rahmen wird vorzugsweise so ausgeführt, dass er bezüglich seiner Längsausrichtung fahrtrichtungsunabhängig ist. Dadurch kann ein solcher asymmetrischer Rahmen in zwei Einbaulagen (d.h. in Vor- oder Rückwärtsrichtung) an einem landwirtschaftlichen Anhänger montiert werden, wodurch sich die Anzahl von möglichen Verschraubungspositionen für Achsmodule vorteilhaft erhöht und noch weitere Achsabstände realisierbar sind.

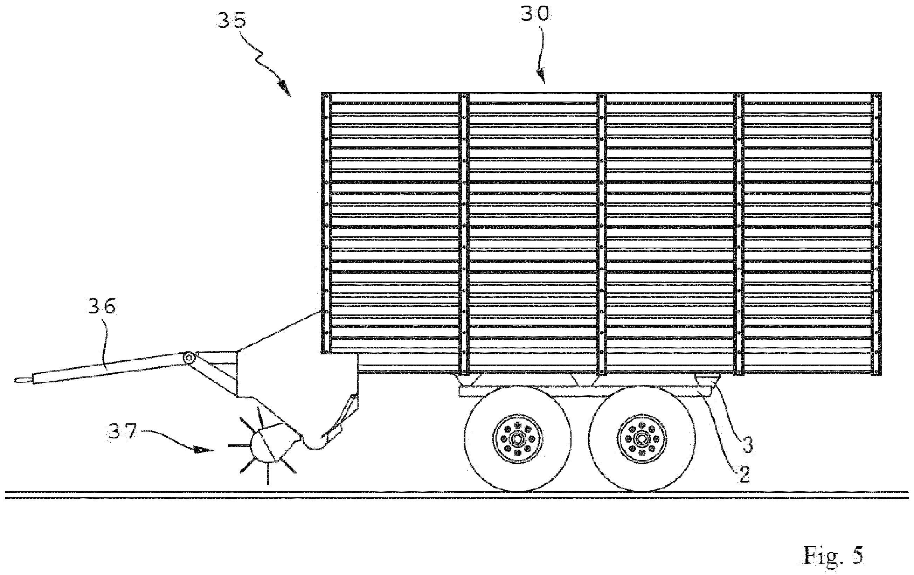

Die Fig. 5 zeigt einen landwirtschaftlichen Anhänger mit einem erfindungsgemäßen Achsaggregat in Form eines Ladewagens 35, der mit einem Ladeaggregat 37 zum Beladen des Laderaums 30 mit am Boden liegendem Erntegut ausgestattet ist. Der Ladewagen 35 kann mit einer Deichsel 36 an einen Schlepper angehängt werden und über nicht dargestellte Energieanschlüsse mit der erforderlichen Antriebsleistung versorgt werden. Unterhalb des Laderaums 30 sind Querträger 3 und ein Längsträger 2 eines erfindungsgemäßen Achsaggregats erkennbar, an welchen zwei Achsen aufgehängt sind.

Durch Demontage des Ladeaggregates 37 kann der Ladewagen 35 als Kombiwagen, zu einem Häckseltransportwagen umgerüstet werden.

Selbstverständlich können auch andere landwirtschaftliche Anhänger, wie Pressen, Güllefässer, Miststreuer o.a. mit einem erfindungsgemäßen Achsaggregat ausgestattet werden.

**Bezugszeichenliste**

| | | | |
|---|---|---|---|
| 1 | Achsaggregat | a, b, c, d | Seiten am Trapez |
| 2 | Längsträger | h | Höhe |
| 3 | Querträger | s | Hebelarm |
| 4 | Aufnahme | t | Hebelarm |
| 5 | Halterung | F1 | Kraft |
| 6 | Bohrung | FN | Kraft |
| 7 | Blattfeder | | |
| 8 | Aufnahme | | |
| 9 | Zugstrebe | | |
| 10 | Bohrung | | |
| | | | |
| 11 | Achsmodul | | |
| 15 | Achsmodul | | |
| 16 | Halterung | | |
| 17 | Bohrung | | |
| 18 | Parabolfeder, Zugstrebe | | |
| 19 | Hydraulikzylinder | | |
| 20 | Achse | | |
| 21 | Achskörper | | |
| 22 | Nabe | | |
| 23 | Lenkung | | |
| 24 | Rad | | |
| 25 | (Dom-)Strebe | | |
| 26 | Bohrung | | |
| | | | |
| 30 | Laderaum/Nutzraum | | |
| 31 | Kratzboden | | |
| 32 | Zugmittel | | |
| 33 | Rad | | |
| | | | |
| 35 | Ladewagen | | |
| 36 | Deichsel | | |
| 37 | Ladeaggregat | | |

## Patentansprüche

1. Achsaggregat (1) für einen landwirtschaftlichen Anhänger (35) mit einem Rahmen (2, 3), auf welchem ein Nutzraum bzw. eine Nutzfläche des Anhängers (35) abgestützt ist und mit Achsmodulen (11, 15), welche am Rahmen (2, 3) angeordnet sind und sich mit Rädern (24, 33) am Boden abstützen, wobei die Achsmodule (11, 15) über Halterungen (5, 16) lösbar am Rahmen (2, 3) befestigt sind und der Rahmen (2, 3) aus mindestens einem Längsträger (2) besteht, an dem die Achsmodule (11, 15) angeordnet sind und an dem oder den Längsträgern (2) mindestens zwei verschiedene in Längsrichtung versetzte Aufnahmepositionen für die Achsmodule (11, 15) vorgesehen sind, wobei der oder die Längsträger (2) einen trapezförmigen Querschnitt aufweisen und als offenes Hohlprofil ausgeführt sind, **dadurch gekennzeichnet, dass** eine Grundfläche (a) des Trapezes an die Breite der Halterungen (5, 16) angepasst ist und eine Oberseite (c) des Längsträgers wesentlich schmäler als die Grundfläche (a) ausgelegt ist.

2. Achsaggregat nach Anspruch 1, **dadurch gekennzeichnet, dass** die Achsmodule (11, 15) mit dem Rahmen (2, 3) verschraubt oder mittels Klemmverbindungen am Rahmen (2, 3) befestigt sind.

3. Achsaggregat nach Anspruch 1, **dadurch gekennzeichnet, dass** die verschiedenen Aufnahmepositionen durch Bohrungen (10) am Längsträger (2, 3) festgelegt werden, die um ein vorgegebenes Rastermaß versetzt sind.

4. Achsaggregat nach Anspruch 3, **dadurch gekennzeichnet, dass** die Abstände der Bohrungen (10) am Längsträger den Bohrungsabständen der Achsmodule (11, 15) entsprechen, so dass die Achsmodule (11, 15) an den verschiedenen Aufnahmepositionen aufnehmbar sind.

5. Achsaggregat nach einem der vorangehenden Ansprüche, **dadurch gekennzeichnet, dass** am Rahmen Querträger (3) vorgesehen sind, die etwa orthogonal zur Fahrtrichtung (F) ausgerichtet sind und den Nutzraum bzw. die Nutzfläche aufnehmen.

6. Achsaggregat nach einem der vorangehenden Ansprüche 1 bis 5, **dadurch gekennzeichnet, dass** an den Achsmodulen (15) Federelemente (19) vorgesehen sind, die so angeordnet sind, dass die Abstützkräfte der Räder (24) schräg in den Rahmen (2) eingeleitet werden.

7. Landwirtschaftlicher Anhänger **gekennzeichnet durch** ein Achsaggregat (1) nach einem der vorangehenden Ansprüche.

8. Landwirtschaftlicher Anhänger nach Anspruch 7, **dadurch gekennzeichnet, dass** der Anhänger als Selbstladewagen (35) zur Aufnahme von am Boden liegendem Erntegut für den landwirtschaftlichen Feldeinsatz ausgeführt ist.

## Claims

1. An axle assembly (1) for an agricultural trailer (35) comprising a frame (2, 3) on which a useable space or a useable surface of the trailer (35) is supported, and axle modules (11, 15) which are arranged at the frame (2, 3) and are supported on the ground with wheels (24, 33), wherein the axle modules (11, 15) are fixed releasably to the frame (2, 3) by way of holding devices (5, 16) and the frame (2, 3) comprises at least one longitudinal bearer (2) on which the axle modules (11, 15) are arranged and provided at the longitudinal bearer or bearers (2) are at least two different receiving positions which are displaced in the longitudinal direction for the axle modules (11, 15), wherein the longitudinal bearer or bearers (2) are of a trapezoidal cross-section and are in the form of an open hollow profile member, **characterised in that** a base surface (a) of the trapezium is adapted to the width of the holding devices (5, 16) and a top side (c) of the longitudinal bearer is substantially narrower than the base surface (a).

2. An axle assembly according to claim 1 **characterised in that** the axle modules (11, 15) are screwed to the frame (2, 3) or fixed to the frame (2, 3) by means of clamping connections.

3. An axle assembly according to claim 1 **characterised in that** the various receiving positions are established by bores (10) on the longitudinal bearer (2, 3), which are displaced by a predetermined modular dimension.

4. An axle assembly according to claim 3 **characterised in that** the spacings of the bores (10) on the longitudinal bearer correspond to the bore spacings of the axle modules (11, 15) so that the axle modules (11, 15) can be received at the various receiving positions.

5. An axle assembly according to one of the preceding claims **characterised in that** provided on the frame are transverse bearers (3) which are oriented in approximately orthogonal relationship with the direction of travel (F) and receive the useable space or surface.

6. An axle assembly according to one of preceding claims 1 to 5 **characterised in that** provided on the axle modules (15) are spring elements (19) so arranged that the support forces of the wheels (24) are applied inclinedly to the frame (2).

7. An agricultural trailer **characterised by** an axle assembly (1) according to one of the preceding claims.

8. An agricultural trailer according to claim 7 **characterised in that** the trailer is in the form of a self-loading wagon (35) for receiving crop material lying on the ground for agricultural field work.

## Revendications

1. Groupe d'essieux (1) pour une remorque agricole (35), comprenant un bâti (2, 3) sur lequel prend appui un volume utile, respectivement une surface utile de la remorque (35) et comprenant des modules d'essieu (11, 15) qui sont disposés sur le bâti (2, 3) et prennent appui au sol par l'intermédiaire de roues (24, 33), les modules d'essieu (11, 15) étant fixés au bâti (2, 3) de manière amovible par l'intermédiaire de supports (5, 16) et le bâti étant constitué d'au moins un longeron (2) sur lequel les modules d'essieu (11, 15) sont disposés, et sur lequel ou lesquels longerons (2) étant prévues pour les modules d'essieu (11, 15) au moins deux positions de réception différentes décalées dans la direction longitudinale, le ou les longerons (2) présentant une section transversale trapézoïdale et étant conformés en profil creux ouvert, **caractérisé en ce qu'**une surface de base (a) du trapèze est adaptée à la largeur des supports (5, 16) et un dessus (c) du longeron est de conception nettement plus étroite que la surface de base (a) .

2. Groupe d'essieux selon la revendication 1, **caractérisé en ce que** les modules d'essieu (11, 15) sont vissés au bâti (2, 3) ou fixés au bâti (2, 3) au moyen de liaisons par serrage.

3. Groupe d'essieux selon la revendication 1, **caractérisé en ce que** les différentes positions de réception sont définies par des perçages (10) sur le longeron (2, 3), lesquels sont décalés selon une cote de trame prédéfinie.

4. Groupe d'essieux selon la revendication 3, **caractérisé en ce que** les écartements des perçages (10) sur le longeron correspondent aux écartements de perçages des modules d'essieu (11, 15), de sorte que les modules d'essieu (11, 15) peuvent être reçus dans les différentes positions de réception.

5. Groupe d'essieux selon une des revendications précédentes, **caractérisé en ce que** sur le bâti sont prévues des traverses (3) qui sont orientées de façon sensiblement orthogonale au sens de la marche (F) et qui reçoivent le volume utile, respectivement la surface utile.

6. Groupe d'essieux selon une des revendications précédentes 1 à 5, **caractérisé en ce que** sur les modules d'essieu (15) sont prévus des éléments élastiques (19) qui sont disposés de façon que les forces d'appui des roues (24) soient transmises au bâti (2) en biais.

7. Remorque agricole, **caractérisée par** un groupe d'essieux (1) selon une des revendications précédentes.

8. Remorque agricole selon la revendication 7, **caractérisée en ce que** la remorque est conformée en remorque autochargeuse (35) utilisable dans des champs agricoles et destinée à recevoir du produit récolté couché sur le sol.
